# EUROPEAN PATENT APPLICATION

(11) **EP 3 982 533 A1**
(43) Date of publication of application: **13.04.2022**
(21) Application number: 21201763.6
(22) Date of filing: 08.10.2021
(51) Int. Cl.: H02P 3/22, B60L 3/00, B60L 7/00, H02M 1/32

(54) **MOTOR CONTROL METHOD AND CIRCUIT FOR VEHICLE, MOTOR DRIVE SYSTEM, AND VEHICLE**

(30) Priority: 10.10.2020 CN 202011083111
(71) Applicant: Nio Technology (Anhui) Co., Ltd, Hefei City, Anhui 230601 (CN)
(72) Inventor: MUSALIYARAKAM, Najid Ali, Hefei, 230601 (CN); SU, Xiezu, Hefei, 230601 (CN); ZHANG, Fan, Hefei, 230601 (CN); SHAN, Liang, Hefei, 230601 (CN); HONG, Wencheng, Hefei, 230601 (CN)
(74) Representative: Vossius & Partner Patentanwälte Rechtsanwälte mbB

(57) **Abstract**

The invention relates to a motor control method for a vehicle. The method includes: determining that a motor control unit (MCU) malfunctions; monitoring an output alternating current frequency of an electric motor; and controlling, based on the output alternating current frequency, the electric motor to switch between an active short circuit state and a safety pulse off state. The invention further relates to a motor control circuit for a vehicle, a motor drive system, and a vehicle.

## Description

### Technical Field

The invention relates to a motor control strategy for a vehicle, and more specifically, to a motor control method and circuit for a vehicle, a motor drive system, and a vehicle.

### Background Art

As a basic functional safety requirement for an application of a motor drive system, the system should detect whether there is an event that may violate a safety goal, and enter a safe state. However, in order to improve the availability and user experience of a vehicle, a fail-operational mode is introduced. For example, in a dual-motor drive system, if one motor drive system with a permanent magnet synchronous motor (PMSM) malfunctions, the other motor drive system continues to operate in a controlled manner. Therefore, the vehicle is still in a controlled operational mode or a limp home mode.

During the fail-operational mode, a motor control unit (MCU) should control (an inverter of) an electric motor to switch between an active short circuit state (ASC state) and a safety pulse off state (SPO state). However, if the motor control unit malfunctions itself, safety hazards may be caused to the vehicle. For example, when the vehicle is running at a high speed, a back electromotive force of an onboard motor may be very large. In this case, if all switching tubes of a three-phase bridge inverter of the electric motor are directly turned off (that is, to switch to or enter the SPO state), the excessive back electromotive force may cause direct current bus overvoltage and generates a very large dynamo braking torque. The direct current bus overvoltage may damage a switching tube of the inverter, and the very large dynamo braking torque may cause a battery to be overcharged or even explode or increase the risk of overturning.

### Summary of the Invention

According to an aspect of the invention, there is provided a motor control method for a vehicle, the method including: determining that a motor control unit (MCU) malfunctions; monitoring an output alternating current frequency of an electric motor; and controlling, based on the output alternating current frequency, the electric motor to switch between an active short circuit state and a safety pulse off state.

As a supplement or an alternative to the above solution, in the above motor control method, the monitoring an output alternating current frequency of an electric motor includes: obtaining an alternating current value output by the electric motor; converting the alternating current value into a digital pulse-width modulation signal by using a zero-crossing detector; and converting a frequency of the digital pulse-width modulation signal into a first voltage value by using a frequency-to-voltage converter.

As a supplement or an alternative to the above solution, in the above motor control method, the frequency of the digital pulse-width modulation signal is equal to or proportional to a frequency of the alternating current value.

As a supplement or an alternative to the above solution, in the above motor control method, the controlling, based on the output alternating current frequency, the electric motor to switch between an active short circuit state and a safety pulse off state includes: when the output alternating current frequency is less than a first threshold, switching an inverter connected to the electric motor to the safety pulse off state.

As a supplement or an alternative to the above solution, in the above motor control method, the controlling, based on the output alternating current frequency, the electric motor to switch between an active short circuit state and a safety pulse off state further includes: when the output alternating current frequency is greater than or equal to the first threshold, switching the inverter to the active short circuit state.

As a supplement or an alternative to the above solution, in the above motor control method, the controlling, based on the output alternating current frequency, the electric motor to switch between an active short circuit state and a safety pulse off state includes: if the first voltage value is less than a second threshold, switching an inverter connected to the electric motor to the safety pulse off state; and if the first voltage value is greater than or equal to the second threshold, switching the inverter to the active short circuit state.

According to another aspect of the invention, there is provided a motor control circuit for a vehicle, the circuit including: a monitoring circuit configured to monitor an output alternating current frequency of an electric motor when it is determined that a motor control unit (MCU) malfunctions; and a switching circuit configured to control, based on the output alternating current frequency, the electric motor to switch between an active short circuit state and a safety pulse off state.

As a supplement or an alternative to the above solution, in the above motor control circuit, the motor control circuit is connected in parallel to the motor control unit (MCU).

As a supplement or an alternative to the above solution, in the above motor control circuit, the monitoring circuit includes: an alternating current sensor configured to obtain an alternating current value output by the electric motor; a zero-crossing detector configured to convert the alternating current value into a digital pulse-width modulation signal; and a frequency-to-voltage converter configured to convert a frequency of the digital pulse-width modulation signal into a first voltage value.

As a supplement or an alternative to the above solution, in the above motor control circuit, the frequency of the digital pulse-width modulation signal is equal to or proportional to a frequency of the alternating current value.

As a supplement or an alternative to the above solution, in the above motor control circuit, the switching circuit includes: a comparator configured to compare the first voltage value with a reference threshold; and switching logic configured to: when the first voltage value is less than the reference threshold, switch an inverter connected to the electric motor to the safety pulse off state, where the switching logic is further configured to: when the first voltage value is greater than or equal to the reference threshold, switch the inverter to the active short circuit state.

According to still another aspect of the invention, there is provided a motor drive system, including a motor control unit (MCU) and the aforementioned motor control circuit connected in parallel to the motor control unit (MCU).

According to yet another aspect of the invention, there is provided a vehicle, including the motor drive system as described above.

According to the motor control scheme for a vehicle in the embodiments of the invention, the output alternating current frequency of the electric motor may be monitored when the motor control unit malfunctions (for example, during a fail operation), to properly switch between the active short circuit state (ASC state) and the safety pulse off state (SPO state), which can meet a basic functional safety requirement of the application of the motor drive system; and prevent the electric motor from entering the safety pulse off state (SPO state) when the vehicle is at a high speed, which improves the availability and user experience of the vehicle during the fail operation.

### Brief Description of the Drawings

The above and other objectives and advantages of the invention will be more thorough and clearer from the following detailed description in conjunction with the drawings, where the same or similar elements are represented by the same reference numerals.
Fig. 1 is a topological structure diagram of a three-phase bridge inverter according to an embodiment of the invention;
Fig. 2 is a schematic diagram of a motor control method for a vehicle according to an embodiment of the invention;
Fig. 3 is a logical schematic diagram of a motor drive system according to an embodiment of the invention; and
Fig. 4 is a schematic structural diagram of a motor control circuit for a vehicle according to an embodiment of the invention.

### Detailed Description of Embodiments

To make the objectives, technical solutions, and advantages of the invention clearer, specific embodiments of the invention will be described in further detail below with reference to the accompanying drawings. It can be understood that the specific embodiments described herein are used merely to explain the invention, rather than limit the invention.

In addition, it should also be noted that, for ease of description, the accompanying drawings show only parts related to the invention rather than all content of the invention. Before discussing exemplary embodiments in more detail, it should be noted that some exemplary embodiments are described as processes or methods that are depicted as flowcharts. Although the flowcharts describe various operations (or steps) as sequential processing, many of the operations may be implemented in parallel, concurrently, or simultaneously. In addition, the sequence of the operations may be rearranged. The processing may be terminated when its operations are completed, but it may also have additional steps not included in the accompanying drawings. The processing may correspond to methods, functions, procedures, subroutines, subprograms, and so on.

It should be understood that the term "vehicle" or other similar terms used herein includes general motor vehicles, such as passenger vehicles (including sport utility vehicles, buses, trucks, etc.), various commercial vehicles, etc., and includes hybrid vehicles, electric vehicles, etc. A hybrid vehicle is a vehicle with two or more power sources, such as a vehicle powered by a gasoline engine and an electric motor.

Although exemplary embodiments are described as using a plurality of units to perform exemplary processes, it should be understood that these exemplary processes may also be performed by one or more modules.

In a motor drive system of a vehicle, a normal operation of an electric motor is extremely important. Once the electric motor malfunctions, it may lead to a system exception, or even a fatal car crash. In addition, as a bottom-layer executive device, a motor drive system can hardly implement self control and diagnosis. Therefore, when the electric motor malfunctions, the motor drive system needs to be actively protected. Two most common active protection measures are safety pulse off (SPO) that may also be referred to as freewheeling and active short circuit (ASC). The SPO implements the separation of an electric motor and a controller by turning off all switching tubes (such separation is not thorough, because a body diode has a function of flyback). The ASC implements the separation of an electric motor and a controller by short-circuiting an upper bridge or a lower bridge.

The motor drive system further includes an inverter unit, which is widely used to convert a direct current voltage into a single-phase or multi-phase alternating current voltage. For a battery electric vehicle (BEV), a hybrid vehicle, etc., an inverter unit usually converts a DC voltage provided by a battery into a three-phase AC voltage to provide electric power for an electric motor that drives the vehicle. The inverter unit may be controlled by a motor control unit. For example, the motor control unit directly or indirectly provides a pulse-width modulation (PWM) signal to a gate of a switch element connected to an intermediate circuit, and therefore, an alternating current is generated by means of an on/off mode of the switch element. In a case of a fault (such as overvoltage), the motor control unit may turn on or off a switching tube in a bridge arm of a three-phase inverter unit to prevent a component from being damaged.

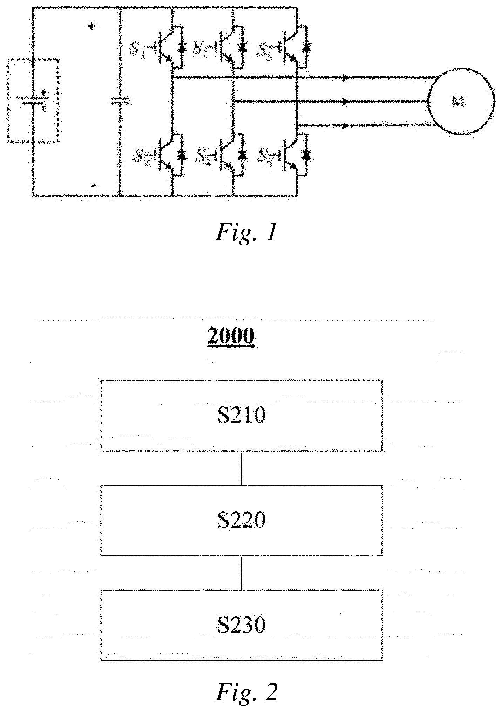

Fig. 1 is a topological structure diagram of a three-phase bridge inverter 1000 according to an embodiment of the invention. A direct current side of the three-phase bridge inverter is connected to a battery, and an alternating current side thereof is connected to an electric motor M. In addition, an upper bridge arm of the three-phase bridge inverter includes three switching tubes S1, S3, and S5, and a lower bridge arm includes three switching tubes S2, S4, and S6. When a fault occurs, a motor control unit may control the inverter to turn on the switching tubes S2, S4, and S6 (that is, the switching tubes in the lower bridge arm), and turn off the switching tubes S1, S3, and S5 of the upper bridge arm (that is, to enter an active short circuit state). When another fault occurs, the motor control unit may control the inverter to turn off all the switching tubes (that is, to enter a safety pulse off state).

The motor control unit (MCU) may monitor a speed of a vehicle by decoding a signal of a resolver, and control switching between the active short circuit state (ASC state) and the safety pulse off state (SPO state) based on the monitored speed. However, when the motor control unit (MCU) malfunctions itself, the only possible safe state is either to continue the SPO state (that is, all switching tubes in the inverter remain in an off state) or to continue the ASC state (that is, all the switching tubes in the upper bridge arm or the lower bridge arm of the inverter remain in a three-phase on state). However, if the SPO state is continued in a case of a high speed, a high charging current poses a potential safety threat to a battery module.

In view of this problem, the inventors of the present application propose to monitor a frequency of an alternating current of the electric motor when the motor control unit malfunctions and switch between the ASC state and the SPO state (by estimating a vehicle speed) based on the frequency.

Fig. 2 is a schematic diagram of a motor control method 2000 for a vehicle according to an embodiment of the invention. As shown in Fig. 2, the method 2000 includes the following steps:
step S210: determining that a motor control unit (MCU) malfunctions;
step S220: monitoring an output alternating current frequency of an electric motor; and
step S230: controlling, based on the output alternating current frequency, the electric motor to switch between an active short circuit state and a safety pulse off state.

In the context of the invention, the "motor control unit" is also referred to as an MCU, a micro control unit, or a microcontroller, and is configured to control the electric motor of the vehicle. The MCU is applicable to various types of motor control, and an internally integrated motor control module can simplify a client's development of motor control. Moreover, compared with a digital signal processor (DSP), the MCU can better implement servo control and protection functions of the electric motor.

The term "active short circuit" is also referred to as active short circuit protection or active short circuit (ASC), and may be implemented in the following manner: turning off three tubes IGBTs in an upper bridge arm of an inverter, and turning on three tubes IGBTs in a lower bridge arm at the same time; or turning on the three tubes IGBTs in the upper bridge arm of the inverter, and turning off the three tubes IGBTs in the lower bridge arm at the same time. For example, in the following scenarios, the electric motor may enter the ASC state or mode: When the entire vehicle is out of control, implementing ASC can generate a reverse torque, which makes the vehicle brake slowly and implement a safe stop; when a traction battery malfunctions, implementing ASC can isolate the electric motor and the motor control unit from the traction battery side to ensure high-voltage safety of the entire vehicle; when a rotational speed of a drive motor is too high or anomalous during the travelling of the entire vehicle, implementing ASC can avoid damage caused by an excessive back electromotive force to the traction battery, a bus capacitor, and other high-voltage devices; and when a switching tube IGBT in the inverter malfunctions, implementing ASC can avoid damage to other devices or the traction battery caused by uncontrollable rectification.

The term "safety pulse off' is also referred to as a pulse off mode or safety pulse off (SPO), which releases the electric motor from the control of the controller by turning off all the switching tubes in the inverter. Under this condition, energy on the electric motor side can only be passively rectified by means of a backward diode on an inverter bridge. An advantage of the SPO is that a large "unexpected torque" is not produced, and therefore a driver's manipulation is not affected. However, if the SPO is performed during a high-speed process of the electric motor (generally, the electric motor is in a field weakening state in this case), a d-axis current disappears, and the increase of a d-axis magnetic field may cause a higher back electromotive force. After being passively rectified by a diode, a voltage of the back electromotive force is greater than a voltage of a battery, so as to charge the battery. This causes a bus voltage to rise, also affects other electronic components such as IGBTs connected to a bus, and increases the risk of a controller failure.

Therefore, in one embodiment, when it is determined that the motor control unit (MCU) malfunctions, the electric motor is controlled based on the monitored output alternating current frequency of the electric motor (namely, an alternating current frequency) to switch between the active short circuit state and the safety pulse off state. For example, when the output alternating current frequency is less than a first threshold (where the first threshold may be preset according to situations), an inverter connected to the electric motor is switched to the safety pulse off (SPO) state. In addition, when the output alternating current frequency is greater than or equal to the first threshold, the inverter is switched to the active short circuit (ASC) state.

In another embodiment, when a fault event occurs on the motor drive system, the ASC state is activated by default. In addition, the output alternating current frequency of the electric motor is continuously monitored, and the state is not switched from the ASC state to the SPO state until the output alternating current frequency is less than the first threshold, thereby avoiding the potential risk of charging a high-voltage battery with an uncontrolled regenerative current during a fail-operational mode or a fail-safe mode.

In an embodiment of the above motor control method 2000, step S220 may include: obtaining an alternating current value output by the electric motor; converting the alternating current value into a digital pulse-width modulation signal by using a zero-crossing detector; and converting a frequency of the digital pulse-width modulation signal into a first voltage value by using a frequency-to-voltage converter. In one or more embodiments, the frequency of the digital pulse-width modulation signal may be equal to or proportional to a frequency of the alternating current value.

In an embodiment, step S230 may include: when the output alternating current frequency is less than a first threshold, switching an inverter connected to the electric motor to the safety pulse off state. Step S230 may further include: when the output alternating current frequency is greater than or equal to the first threshold, switching the inverter to the active short circuit state.

In another embodiment, step S230 may include: when the first voltage value corresponding to the output alternating current frequency of the electric motor is less than a second threshold, switching an inverter connected to the electric motor to the safety pulse off state; and if the first voltage value is greater than or equal to the second threshold, switching the inverter to the active short circuit state.

In still another embodiment, when it is determined that the motor control unit (MCU) malfunctions, the ASC state is activated by default. In addition, the first voltage value is continuously monitored, and the state is not switched from the ASC state to the SPO state until the first voltage value is less than the second threshold, thereby avoiding the potential risk of charging a high-voltage battery with an uncontrolled regenerative current during a fail-operational mode or a fail-safe mode.

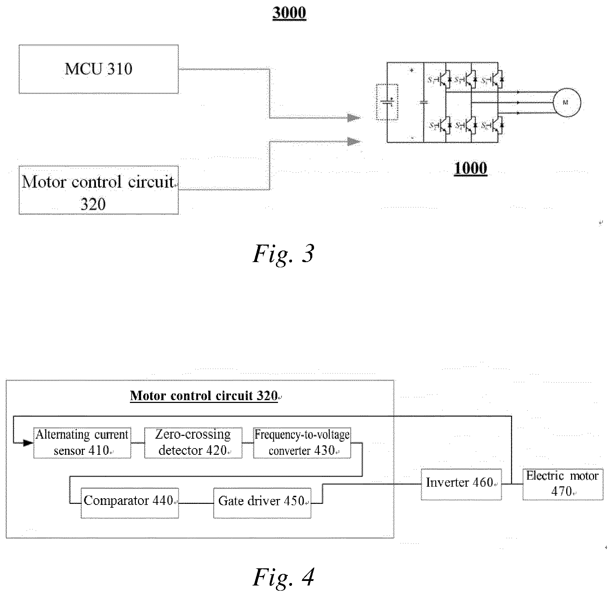

Fig. 3 is a logical schematic diagram of a motor drive system 3000 according to an embodiment of the invention. As shown in Fig. 3, the motor drive system 3000 includes a motor control unit (MCU) 310, a motor control circuit 320, and an inverter circuit 1000, where the motor control unit (MCU) 310 is connected in parallel to the motor control circuit 320. When the motor control unit (MCU) 310 operates normally, the MCU 310 drives the inverter circuit 1000 in a fail-operational mode, for example, by sending a pulse-width modulation (PWM) signal. When the motor control unit (MCU) 310 malfunctions, the motor control circuit 320 starts to work. In an embodiment, the motor control circuit 320 continuously monitors a frequency of a (three-phase) alternating current of the electric motor, and switches between an ASC state and an SPO state based on the monitored frequency of the alternating current, so as to avoid entering the SPO state when a vehicle is at a high speed.

In the motor drive system 3000 shown in Fig. 3, the motor control unit (MCU) 310 is connected in parallel to the motor control circuit 320, and they control the inverter circuit 1000 together. A control link of the motor control unit (MCU) 310 is a primary control link (which may also be referred to as a primary off link), and a control link of the motor control circuit 320 is a secondary control link (which may also be referred to as a secondary off link). That is, in one or more embodiments of the invention, on the basis of the motor control unit (MCU) 310, additionally providing the motor control circuit 320 (as a secondary control link) can avoid that when the MCU 310 malfunctions, the electric motor enters the SPO state when the vehicle is at a high speed, and can avoid safety hazards. This implementation does not require an additional MCU, and the implementation is very simple and straightforward with low implementation costs.

In an embodiment of the invention, a motor control circuit for a vehicle may include a monitoring circuit and a switching circuit, where the monitoring circuit is configured to monitor an output alternating current frequency of an electric motor when it is determined that a motor control unit (MCU) malfunctions, and the switching circuit is configured to control, based on the output alternating current frequency, the electric motor to switch between an active short circuit state and a safety pulse off state.

Fig. 4 is a schematic diagram of a specific structure of a motor control circuit 320 for a vehicle according to an embodiment of the invention. In Fig. 4, a monitoring circuit may include an alternating current sensor 410, a zero-crossing detector 420, and a frequency-to-voltage converter 430. The alternating current sensor 410 is configured to obtain an alternating current value output by an electric motor; the zero-crossing detector 420 is configured to convert the alternating current value into a digital pulse-width modulation signal; and the frequency-to-voltage converter 430 is configured to convert a frequency of the digital pulse-width modulation signal into a first voltage value.

In the motor control circuit 320 shown in Fig. 4, the switching circuit may include a comparator 440 and a gate driver 450. The comparator is configured to compare the first voltage value obtained through conversion by the frequency-to-voltage converter 430 with a reference threshold, and the gate driver 450 is configured to: when the first voltage value is less than the reference threshold, switch an inverter 460 connected to the electric motor 470 to a safety pulse off state (that is, to turn off all switching tubes in the inverter 460). In an embodiment, the gate driver 450 is further configured to: when the first voltage value obtained through conversion by the frequency-to-voltage converter 430 is greater than or equal to the reference threshold, switch the inverter 460 to an active short circuit state (for example, by turning off three tubes IGBTs in an upper bridge arm of the inverter, and turning on three tubes IGBTs in a lower bridge arm at the same time; or turning on the three tubes IGBTs in the upper bridge arm of the inverter, and turning off the three tubes IGBTs in the lower bridge arm at the same time).

Because the above first voltage value reflects a speed of the vehicle, whether the vehicle is running at a high speed can be determined by comparing the first voltage value with a predetermined reference threshold. If the vehicle is running at a high speed, it should be ensured that the vehicle is switched to the active short circuit state (and avoid entering the SPO state) to avoid violating a safety goal of the vehicle.

In conclusion, according to the motor control scheme for a vehicle in the embodiments of the invention, the output alternating current frequency of the electric motor may be monitored when the motor control unit malfunctions (for example, during a fail operation), to properly switch between the active short circuit state (ASC state) and the safety pulse off state (SPO state), which can meet a basic functional safety requirement of the application of the motor drive system; and prevent the electric motor from entering the safety pulse off state (SPO state) when the vehicle is at a high speed, which improves the availability and user experience of the vehicle during the fail operation.

Although only some embodiments of the invention are described in the specification, it will be appreciated by those skilled in the art that the invention may be embodied in many other forms without departing from the essence and scope thereof. Accordingly, the presented examples and implementations are considered to be illustrative rather than restrictive, and the invention may encompass various modifications and replacements without departing from the spirit and scope of the invention that are defined by the appended claims.

## Claims

1. A motor control method for a vehicle, wherein the method comprises:
determining that a motor control unit (MCU) malfunctions;
monitoring an output alternating current frequency of an electric motor; and
controlling, based on the output alternating current frequency, the electric motor to switch between an active short circuit state and a safety pulse off state.

2. The method according to claim 1, wherein the monitoring an output alternating current frequency of an electric motor comprises:
obtaining an alternating current value output by the electric motor;
converting the alternating current value into a digital pulse-width modulation signal by using a zero-crossing detector; and
converting a frequency of the digital pulse-width modulation signal into a first voltage value by using a frequency-to-voltage converter.

3. The method according to claim 2, wherein the frequency of the digital pulse-width modulation signal is equal to or proportional to a frequency of the alternating current value.

4. The method according to claim 1, wherein the controlling, based on the output alternating current frequency, the electric motor to switch between an active short circuit state and a safety pulse off state comprises:
when the output alternating current frequency is less than a first threshold, switching an inverter connected to the electric motor to the safety pulse off state.

5. The method according to claim 4, wherein the controlling, based on the output alternating current frequency, the electric motor to switch between an active short circuit state and a safety pulse off state further comprises:
when the output alternating current frequency is greater than or equal to the first threshold, switching the inverter to the active short circuit state.

6. The method according to claim 2 or 3, wherein the controlling, based on the output alternating current frequency, the electric motor to switch between an active short circuit state and a safety pulse off state comprises:
if the first voltage value is less than a second threshold, switching an inverter connected to the electric motor to the safety pulse off state; and
if the first voltage value is greater than or equal to the second threshold, switching the inverter to the active short circuit state.

7. A motor control circuit for a vehicle, wherein the circuit comprises:
a monitoring circuit configured to monitor an output alternating current frequency of an electric motor when it is determined that a motor control unit (MCU) malfunctions; and
a switching circuit configured to control, based on the output alternating current frequency, the electric motor to switch between an active short circuit state and a safety pulse off state.

8. The motor control circuit according to claim 7, wherein the motor control circuit is connected in parallel to the motor control unit (MCU).

9. The motor control circuit according to claim 7, wherein the monitoring circuit comprises:
an alternating current sensor configured to obtain an alternating current value output by the electric motor;
a zero-crossing detector configured to convert the alternating current value into a digital pulse-width modulation signal; and
a frequency-to-voltage converter configured to convert a frequency of the digital pulse-width modulation signal into a first voltage value.

10. The motor control circuit according to claim 9, wherein the frequency of the digital pulse-width modulation signal is equal to or proportional to a frequency of the alternating current value.

11. The motor control circuit according to claim 9, wherein the switching circuit comprises:
a comparator configured to compare the first voltage value with a reference threshold; and
switching logic configured to: when the first voltage value is less than the reference threshold, switch an inverter connected to the electric motor to the safety pulse off state, wherein the switching logic is further configured to: when the first voltage value is greater than or equal to the reference threshold, switch the inverter to the active short circuit state.

12. A motor drive system, comprising a motor control unit (MCU) and the motor control circuit according to any one of claims 7 to 11 and connected in parallel to the motor control unit (MCU).

13. A vehicle, comprising the motor drive system according to claim 12.
